(19) Europäisches Patentamt
European Patent Office
Office européen des brevets

(11) **EP 2 164 018 B1**

(12) **FASCICULE DE BREVET EUROPEEN**

(45) Date de publication et mention
de la délivrance du brevet:
**14.08.2019 Bulletin 2019/33**

(51) Int Cl.:
***G06F 21/75*** *(2013.01)*

(21) Numéro de dépôt: **09169928.0**

(22) Date de dépôt: **10.09.2009**

(54) **Procédé de traitement de données et dispositif associé**

Datenverarbeitungsverfahren und entsprechende Vorrichtung

Data processing method and associated device

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **11.09.2008 FR 0856121**

(43) Date de publication de la demande:
**17.03.2010 Bulletin 2010/11**

(73) Titulaire: **IDEMIA France
92400 Courbevoie (FR)**

(72) Inventeurs:
• **Thiebeauld de la Crouee, Hugues
33600 Pessac (FR)**
• **Chamley, Olivier
33850 Leognan (FR)**

(74) Mandataire: **Santarelli
49, avenue des Champs-Elysées
75008 Paris (FR)**

(56) Documents cités:
**EP-A- 1 612 639       EP-A1- 1 575 293
US-A- 5 533 123       US-A1- 2002 124 178**

## Description

La présente invention concerne un procédé de traitement de données et un dispositif associé.

On sait que les procédés de traitement de données incorporant une opération sensible, tel que par exemple une opération cryptographique dans le cas des procédés de traitement cryptographique de données, sont la cible d'attaques de la part de personnes malintentionnées qui cherchent par exemple à avoir accès aux données traitées par le procédé.

Un tel procédé est général mis en oeuvre au sein d'un microprocesseur et les données sont alors représentées sous forme numérique. L'attaque peut alors consister par exemple en l'observation précise du comportement électrique de certaines parties du circuit électronique de façon à tenter d'en déduire son fonctionnement et/ou en la perturbation du fonctionnement à certains instants critiques de celui-ci de manière à obtenir des informations sensibles (i.e. par exemple une clé secrète) grâce aux données émises en sortie du procédé cryptographique, contrairement à ce qui est prévu lors du fonctionnement normal de celui-ci.

De telles attaques sont par ailleurs en général basées sur la répétition d'itérations de l'algorithme cryptographique afin notamment d'essayer de déduire des informations par exemple par une approche statistique.

Il a de ce fait déjà été proposé, par exemple dans la demande de brevet WO 2004/029873, d'empêcher la mise en oeuvre de l'algorithme cryptographique pendant un laps de temps donné lorsque la répétition d'un nombre prédéfini d'itérations de l'algorithme est détectée sur une période donnée. La sécurisation est donc fondée dans ce document sur l'espacement temporel des mises en oeuvre postérieures de l'algorithme.

On connaît également la publication EP 1 612 639 qui décrit un jeton ou une carte équipée d'un détecteur d'attaques pour émettre un signal d'alerte en cas d'attaque potentielle.

On connaît aussi de la publication EP 1 575 293 un module de sécurité pour décodeur audiovisuel, qui analyse des commandes reçues et incrémente un registre d'erreurs aux fins de commander une temporisation (dead time) pour ralentir plus ou moins le décodage.

Dans une toute autre logique, il a été proposé de mettre en oeuvre, de manière systématique au cours des phases sensibles de fonctionnement, des contremesures visant à perturber l'observation du fonctionnement par l'attaquant, comme par exemple le brouillage des signaux électriques par l'ajout d'un signal bruité ou le masquage des valeurs traitées par une valeur aléatoire chaque fois différente (ce qui complique énormément toute possibilité d'attaque). Un exemple d'une solution de ce type est décrit dans la demande de brevet EP 826 169.

Les contre-mesures de ce type ont toutefois des conséquences néfastes sur les performances du procédé du fait par exemple de l'augmentation des calculs nécessaires (coût en temps) et/ou de l'énergie consommée (coût en puissance de fonctionnement).

A titre d'exemple, dans le cas des algorithmes cryptographiques utilisant des tables de substitution (généralement dénommées boîtes S) pour la mise en oeuvre de fonctions non-linéaires (en particulier par rapport à l'opération utilisée pour le masquage), l'utilisation d'un masque, comme mentionné ci-dessus, implique le recalcul des tables de substitution pour chaque masque utilisé, ce qui ralentit notablement l'exécution de l'algorithme cryptographique concerné.

Afin d'améliorer cet état de fait, l'invention propose un procédé de traitement de données comprenant une opération sensible, comme défini par la revendication 1.

Ainsi, les autres itérations formant contre-mesure peuvent être mises en oeuvre avec une ampleur adaptée au risque d'attaque afin de ne pas pénaliser inutilement les performances, et au contraire de mettre en oeuvre des contre-mesures appropriées (éventuellement pénalisantes) lorsqu'un risque d'attaque est détecté.

Ladite valeur définie dans la revendication 1 est par exemple une valeur numérique, ce qui permet de mettre en oeuvre les étapes ci-dessus au cours du traitement de données. Il peut s'agir d'une valeur liée à un paramètre d'exécution de l'opération sensible et /ou qui dépend des exécutions précédentes de l'opération sensible, tel que le nombre de telles exécutions.

L'opération sensible est une opération cryptographique impliquant en général une clé secrète qu'un attaquant cherche à connaître.

Selon une première possibilité, ladite valeur est indicative d'un nombre de mises en oeuvre de l'opération sensible. L'opération sensible (par exemple cryptographique) est en effet répétée lors d'une attaque.

On peut prévoir dans ce cas une étape d'incrémentation d'un compteur mémorisant ladite valeur en cas de mise en oeuvre de l'opération sensible.

Dans ce contexte, on peut prévoir par ailleurs que le compteur soit remis à zéro lorsque le temps écoulé depuis la précédente opération sensible est supérieur à un seuil prédéfini.

On peut également prévoir que le compteur ne soit incrémenté que si le temps écoulé depuis la précédente opération sensible est inférieur à un seuil donné.

Selon une autre possibilité, ladite valeur est indicative d'un temps écoulé entre deux exécutions successives de l'opération cryptographique. La répétition fréquente de l'opération cryptographique indique une attaque probable. On peut alors prévoir par exemple de mettre en oeuvre l'étape supplémentaire formant contremesure seulement lorsque la valeur est inférieure à un seuil prédéterminé.

Les autres itérations peuvent viser (c'est-à-dire être aptes) à augmenter l'entropie du traitement.

On peut prévoir en pratique que la quantité d'autres itérations est croissante en fonction de ladite valeur.

L'invention propose également un dispositif de traitement de données apte à mettre en oeuvre une opération sensible, comme défini par la revendication 8.

Les caractéristiques optionnelles proposées plus haut en termes de procédés sont également applicables à ce dispositif.

Ce dispositif, comme d'ailleurs le dispositif mettant en oeuvre le procédé décrit plus haut, est par exemple une entité électronique portable (ou de poche), tel qu'un assistant numérique personnel, un support de données (par exemple du type clé "*USB*"), une carte à mémoire ou un téléphone mobile. Il peut également s'agir d'un passeport électronique ou d'une carte à microcircuit (telle qu'une carte conforme à la norme ISO7816 et sécurisée, par exemple certifiée conformément aux critères communs), où les besoins en termes de sécurité sont particulièrement prononcés.

D'autres caractéristiques et avantages de l'invention apparaîtront mieux à la description qui suit, faite en référence aux dessins annexés dans lesquels :

-   la figure 1 représente les éléments principaux d'une carte à microcircuit apte à mettre en oeuvre un procédé de traitement selon les enseignements de l'invention ;
-   la figure 2 représente l'aspect physique de la carte à microcircuit de la figure 1 ;
-   la figure 3 représente les étapes d'un premier exemple de procédé de traitement de données réalisé conformément aux enseignements de l'invention ;
-   la figure 4 représente un exemple non revendiqué de mise en oeuvre d'un procédé.

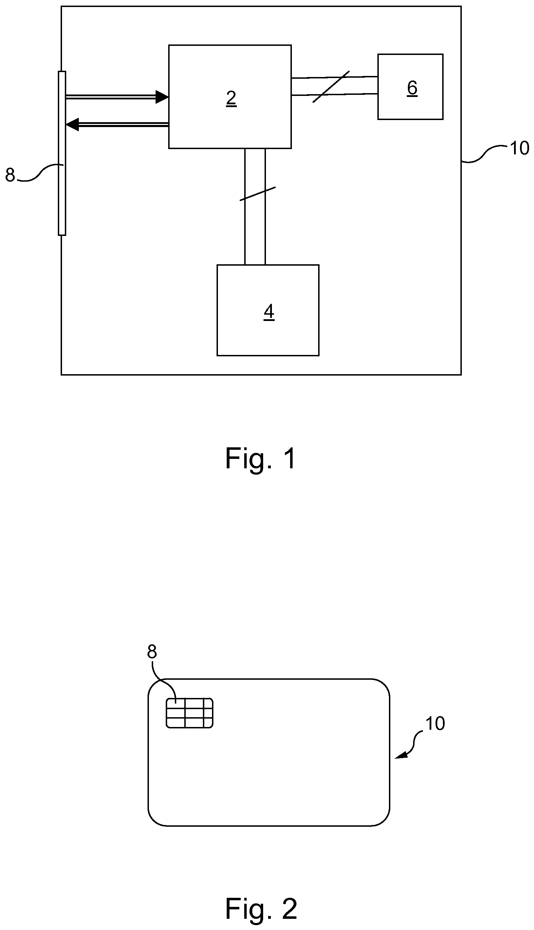

Un exemple de dispositif de traitement de données est une carte à microcircuit 10 dont les principaux éléments électroniques sont représentés à la **figure 1** et qui comporte un microprocesseur 2 relié d'une part à une mémoire vive (ou RAM de l'anglais Random Access Memory) 4 et d'autre part à une mémoire à semi-conducteur non-volatile réinscriptible 6, par exemple une mémoire non-volatile effaçable et programmable électriquement (ou EEPROM de l'anglais "*Electrically Erasable Programable Read Only Memory*"). En variante, la mémoire non-volatile réinscriptible à semi-conducteur 6 pourrait être une mémoire flash.

Les mémoires 4, 6 sont chacune reliées au microprocesseur 2 par un bus sur la figure 1 ; en variante, il pourrait s'agir d'un bus commun.

La carte à microcircuit 10 comporte également une interface 8 de communication avec un lecteur de carte, par exemple dans un terminal utilisateur, réalisée ici sous forme de contacts dont un assure par exemple une liaison bidirectionnelle avec le microprocesseur 2. L'interface 8 permet ainsi l'établissement d'une communication bidirectionnelle entre le microprocesseur 2 et le terminal utilisateur dans lequel la carte à microcircuit 10 sera insérée.

Ainsi, lors de l'insertion de la carte à microcircuit 10 dans le lecteur du terminal utilisateur, le microprocesseur 2 va mettre en oeuvre un procédé de fonctionnement de la carte à microcircuit 10, selon un jeu d'instructions, stockées par exemple dans une mémoire morte (ou ROM de l'anglais "Read-*Only Memory*") - non représentée - ou dans la mémoire réinscriptible 6, qui définit un programme d'ordinateur. Ce procédé inclut en général l'échange de données avec le terminal utilisateur via l'interface 8 et le traitement de données au sein de la carte à microcircuit 10, et précisément au sein du microprocesseur 2 avec utilisation éventuelle de données stockées dans la mémoire réinscriptible 6 et de données stockées temporairement dans la mémoire vive 4.

Des exemples de tels procédés qui mettent en oeuvre l'invention sont donnés dans la suite.

La **figure 2** représente l'allure physique générale de la carte à microcircuit 10 réalisée avec la forme générale d'un parallélépipède rectangle de très faible épaisseur.

L'interface de communication 8 pourvue des contacts déjà mentionnés apparaît clairement sur la face de la carte à microcircuit 10 visible sur la figure 2, sous forme d'un rectangle inscrit dans la face supérieure de la carte à microcircuit 10.

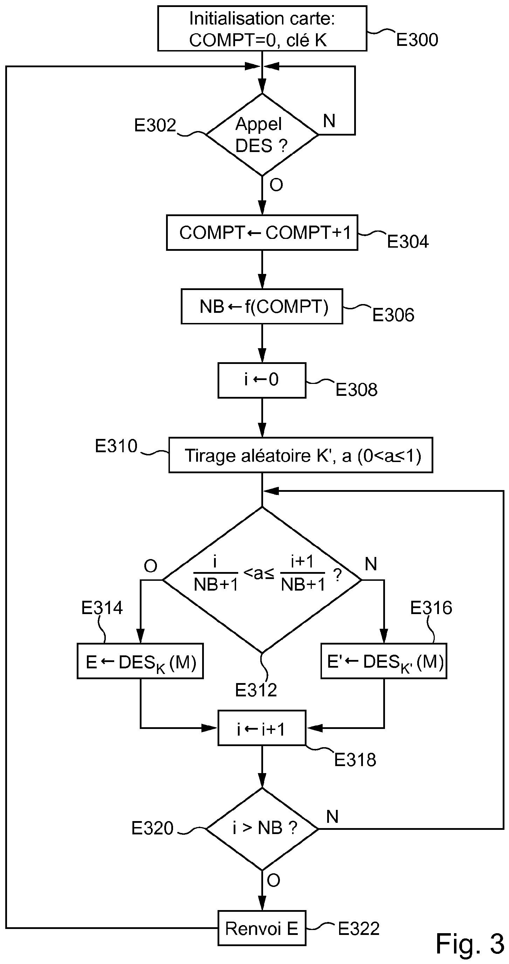

La **figure 3** représente un premier exemple de procédé de traitement de données réalisé conformément aux enseignements de l'invention.

Dans cet exemple, on prévoit un compteur COMPT du nombre de mise en oeuvre d'un algorithme cryptographique particulier (ici par exemple l'algorithme DES pour "*Data Encryption Standard*"). Ce compteur COMPT est par exemple mémorisé dans la mémoire non volatile 6 et est initialisé à zéro avant toute mise en oeuvre de la carte, par exemple lors de la personnalisation de la carte à microcircuit (étape E300), au cours de laquelle on inscrit par exemple également la clé cryptographique (ou clé secrète) K attribuée à la carte.

On s'intéresse dans la suite aux étapes du fonctionnement de la carte à microcircuit lors de son utilisation (et non plus de la personnalisation), où la clé cryptographique K sera utilisée, par exemple afin de chiffrer à l'aide de la clé K un message M reçu d'un utilisateur à travers l'interface 8. Le message M est naturellement codé sous forme numérique et sera considéré comme un nombre pour son chiffrement.

On a par souci de simplification représenté l'étape E302 à laquelle une boucle est réalisée tant que l'algorithme cryptographique n'est pas appelé par le fonctionnement de la carte. D'autres étapes sans lien direct avec la présente invention peuvent toutefois être réalisées à cet endroit.

Lorsqu'un appel à l'algorithme cryptographique est réalisé (oui à l'étape E302), par exemple parce que le programme principal mis en oeuvre dans la carte à microcircuit demande le chiffrement du message M, on passe à l'étape E304 à laquelle on incrémente le compteur COMPT.

On passe alors à l'étape E306 à laquelle on détermine, en fonction de la valeur du compteur COMPT, un nombre NB (en pratique un entier positif ou nul) qui détermine, comme on le verra plus en détail dans la suite, l'importance des contre-mesures à appliquer.

La fonction (f en figure 3) qui relie la valeur du compteur COMPT au nombre NB est par exemple telle que :

- pour des valeurs COMPT comprises entre 1 et un premier seuil, NB=0 ;
- passé ce premier seuil et jusqu'à un second seuil, NB=4 ;
- passé le second seuil et jusqu'à un troisième seuil, NB=8 ;
- au-delà du troisième seuil, NB=16.

Les seuils sont par exemple choisis tels que le premier seuil corresponde à un nombre de mises en oeuvre de l'algorithme cryptographique (ici DES) relativement courant, mais qui puisse faire craindre un début d'attaque, tandis que le troisième seuil correspond à un nombre de mises en oeuvre de l'algorithme cryptographique tout à fait inhabituel dans le cadre d'une utilisation normale de la carte à microcircuit et donc indicatif d'un fort risque d'attaque (le second seuil pouvant être choisi par exemple à mi-chemin entre le premier et le troisième seuil).

Comme on le verra dans la suite, le nombre NB obtenu à l'étape E306 détermine le nombre d'algorithmes cryptographiques - leurres qui seront mis en oeuvre avec une clé cryptographique différente de la clé K mémorisée dans la carte à microcircuit comme précédemment mentionné (et avec laquelle on chiffre le message M).

L'étape E306 est suivie de l'étape E308 à laquelle on initialise à zéro une variable i.

Puis on détermine par tirage aléatoire à l'étape E310 d'une part une variable K' de même longueur que la clé cryptographique K (et qui sera utilisée comme indiqué dans la suite en tant que "*fausse*" clé cryptographique) et d'autre part une valeur a non nulle est comprise entre 0 et 1.

On entre alors dans une boucle dont la première étape E312 consiste à vérifier les inégalités suivantes :

$$\frac{i}{NB+1} < a \le \frac{i+1}{NB+1}.$$

En cas de vérification positive, on passe à l'étape E314, à laquelle on met en oeuvre le chiffrement effectif du message M au moyen de l'algorithme cryptographique DES et de la clé cryptographique K, le résultat (c'est-à-dire le message chiffré) étant dans la suite noté E. Le message chiffré E est par exemple mémorisé en mémoire vive 4.

En cas de vérification négative, on met en oeuvre à l'étape E316 l'algorithme cryptographique DES, par exemple appliqué au même message M (bien qu'en variante on puisse l'appliquer à une quelconque autre donnée), ici en utilisant comme clé cryptographique la valeur K' déterminée par tirage aléatoire à l'étape E310. Le résultat peut être mémorisé dans un registre ou une zone mémoire E' (bien que cette étape de mémorisation ne joue pas de rôle dans la suite ; elle peut toutefois permettre d'augmenter la ressemblance entre l'étape E316 et l'étape E314 pour un attaquant extérieur).

Les étapes E314 et E316 sont suivies de l'étape E318, à laquelle la valeur de i est incrémentée.

On vérifie alors à l'étape E320 si i dépasse la valeur NB précédemment déterminée, auquel cas on passe à l'étape E322. Dans la négative, le nombre d'itérations souhaitées n'a pas été atteint et on reboucle à l'étape E312.

On comprend que la boucle qui vient d'être décrite permet de mettre en oeuvre NB fois l'algorithme cryptographique avec des valeurs qui ne correspondent pas à celles que recherche l'attaquant (ici la valeur obtenue par tirage aléatoire K') et une seule fois l'algorithme cryptographique effectivement mis en oeuvre pour chiffrer le message M (soit avec la clé secrète K), la mise en oeuvre de l'algorithme cryptographique utilisant la clé secrète K étant réalisé parmi les fausses exécutions à un instant dépendant de la valeur a obtenue par tirage aléatoire, et donc à chaque fois différent.

Il sera donc très difficile pour un attaquant de déterminer quelle est l'exécution de l'algorithme cryptographique vers laquelle il doit orienter son attaque.

Les mises en oeuvre supplémentaires de l'algorithme DES sont toutefois limitées en nombre (et même nulles) tant que le risque d'attaques est faible (c'est-à-dire tant que le compte COMPT du nombre des exécutions de l'algorithme cryptographique a une valeur relativement faible), ce qui permet de ne pas trop réduire la vitesse d'exécution de l'algorithme lors d'une utilisation normale de la carte à microcircuit.

En revanche, lorsque le nombre d'appels de l'algorithme cryptographique devient important et que le risque qu'une attaque soit en cours est donc relativement élevé, le nombre de fausses exécutions de l'algorithme cryptographique augmente et il devient donc de plus en plus difficile pour un attaquant de comprendre le fonctionnement du processus, et donc d'avoir accès à la clé secrète K.

Lorsque les NB+1 itérations ont été réalisées (NB fausses itérations avec la valeur K' et une itération avec la clé K), on passe à l'étape E322 comme déjà indiqué, à laquelle on renvoie la valeur E, par exemple à travers l'interface 8, et on retourne à l'étape E302 à laquelle on attend un nouvel appel de l'algorithme cryptographique (ce qui impliquera naturellement une nouvelle incrémentation du compteur COMPT à l'étape E304).

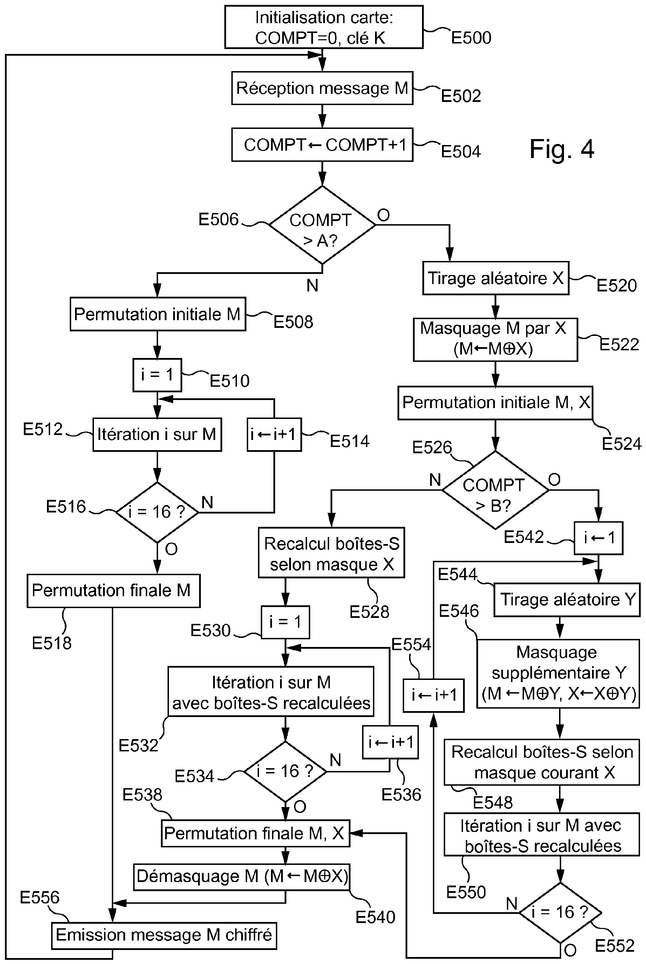

On décrit à présent en référence à la **figure 4** un exemple non revendiqué de procédé.

On inscrit dans la mémoire non volatile 6 lors de la personnalisation de la carte à microcircuit la clé secrète K et une valeur nulle pour un compteur COMPT (étape E500).

Lors de l'utilisation de la carte à microcircuit, par exemple lorsqu'elle est insérée dans un lecteur de carte en vue de l'exécution d'une commande mettant en oeuvre le chiffrement d'un message, elle reçoit par l'interface 8 le message concerné M à l'étape E502.

On incrémente alors la valeur COMPT du compteur du nombre d'exécutions de l'algorithme cryptographique (étape E504).

On pourrait prévoir en variante que l'incrémentation du compteur n'est réalisée que si le temps écoulé depuis la précédente mise en oeuvre de l'algorithme cryptographique est inférieur à un seuil donné.

Selon une autre variante envisageable, éventuellement de manière combinée avec la variante qui précède, le compteur pourrait être remis à zéro si le temps écoulé depuis la précédente mise en oeuvre de l'algorithme cryptographique est supérieur à un autre seuil (cet autre seuil étant supérieur au seuil mentionné pour la variante précédente si les deux variantes sont combinées).

Ces deux variantes peuvent s'appliquer de même à l'exemple de réalisation précédemment décrit en référence à la figure 3. Par ailleurs, le temps écoulé entre deux mises en oeuvre successives de l'algorithme pourra être déterminé par des moyens de mesure autonomes de l'entité électronique (ici de la carte à microcircuit) tels que ceux décrits dans la demande de brevet WO 2004/029873.

Si la valeur du compteur COMPT est déterminée à l'étape E506 comme supérieure strictement à un premier seuil A, on procède aux étapes E520 et suivantes comme décrit plus loin.

Dans la négative à l'étape E506, on procède en revanche aux étapes E508 à 518 comme décrit à présent afin de mettre en oeuvre l'algorithme DES sans masquage.

L'étape E508 consiste à réaliser la permutation initiale du message M prévue dans l'algorithme DES.

On initie alors à l'étape E510 à 1 la valeur d'un registre i destinée à désigner la ronde courante pour l'algorithme DES.

On effectue à l'étape E512 la ronde i où on utilise notamment la clé secrète K et le message M, ainsi que des tables de substitution ou boîtes-S mémorisées en mémoire non volatile 6 pour la mise en oeuvre d'une fonction non linéaire.

On vérifie alors à l'étape E516 si la dernière ronde a été réalisée (c'est-à-dire si i=16).

Dans la négative, on incrémente i à l'étape E514 et on boucle sur l'étape E512.

Dans l'affirmative, on réalise à l'étape E518 la permutation finale du message M prévue dans l'algorithme DES, et, l'algorithme étant réalisé dans son ensemble, on passe à l'étape E556 décrite plus bas.

Comme déjà indiqué, lorsque le compteur COMPT dépasse le seuil A, on passe de l'étape E506 à l'étape E520 à laquelle on détermine une valeur X de longueur égale au message M par tirage aléatoire.

On masque alors à l'étape E522 le message M par la valeur aléatoire X (par exemple par l'opération M ⊕ X).

On mémorise par exemple le résultat du masquage à la place du message M avec écrasement de sorte que la suite du traitement portera sur la valeur masquée afin de rendre quasiment impossible la détermination des valeurs traitées par l'observation du fonctionnement du dispositif.

On remarque que l'on conserve également en mémoire la valeur de X afin de pouvoir démasquer la valeur une fois les opérations sensibles (en particulier celles utilisant la clé secrète K) réalisées.

On procède alors à l'étape E524 à la permutation initiale du message M prévu dans l'algorithme DES. On réalise également cette permutation sur la valeur aléatoire X afin de conserver la correspondance bit à bit entre la valeur masquée et le masque X.

On passe ensuite à l'étape E526 à laquelle on détermine si le compteur COMPT est strictement supérieur à un second seuil B.

Dans l'affirmative, on procède au traitement des étapes E542 et suivantes qui sera décrit plus bas (et consiste pour l'essentiel à appliquer un nouveau masquage à chaque ronde de l'algorithme DES).

Dans la négative à l'étape E526, on effectue les rondes de l'algorithme DES sans changer le masque X.

On peut ainsi à l'étape E528 recalculer les tables de substitution (ou boîtes-S) en fonction du masque X de sorte que les tables recalculées associent, à une valeur masquée en entrée, le résultat associé dans les tables de substitution d'origine (mémorisées en mémoire non volatile 6) à la valeur non masquée et masqué par le masque courant X.

Une fois les boîtes-S recalculées, on peut procéder aux rondes de l'algorithme DES, à commencer par une initialisation d'une variable i à 1 à l'étape E530.

On réalise alors à l'étape E532 la ronde i appliquée au message masqué à l'aide des boîtes-S recalculées lors de l'étape E528. Chaque ronde utilise la clé secrète K et constitue donc une opération sensible.

On teste alors à l'étape E534 si la dernière ronde est atteinte (c'est-à-dire si i = 16).

Dans la négative, on incrémente la valeur de i à l'étape E536 et on boucle à l'étape E532.

Dans l'affirmative, on réalise à l'étape E538 décrite plus loin.

Lorsqu'il est déterminé à l'étape E526 que le compteur COMPT dépasse le second seuil B, on procède à l'étape E542 à laquelle on initialise à 1 la variable i.

On procède alors à l'étape E544 à laquelle on détermine par tirage aléatoire un autre masque Y (c'est-à-dire une valeur de même longueur que le message M).

On applique alors à l'étape E546 ce nouveau masque Y au message précédemment masqué par le masque X à l'étape E522 (puis permuté à l'étape E524).

Pour ce faire, on remplace en mémoire la valeur courante M par la valeur M ⊕ Y et on remplace de même le masque courant X par le masque courant X ⊕ Y afin de tenir compte de ce masquage supplémentaire dans le masque courant.

On procède alors à l'étape E548 au recalcul des tables de substitution (ou boîtes-S) en fonction du masque courant X tel qu'il vient d'être déterminé à l'étape E546 du fait du nouveau masquage par la valeur aléatoire Y.

Comme précédemment, les tables de substitution recalculées associent, à une valeur d'entrée masquée, le résultat associé dans les tables de substitution d'origine à la valeur non masquée et masqué par le masque courant X.

On peut alors réaliser à l'étape E550 la ronde i en utilisant la clé secrète K et les tables de substitution S qui viennent d'être recalculées à l'étape E548.

On détermine ensuite à l'étape E552 si la dernière ronde a été atteinte (c'est-à-dire si i = 16).

Dans la négative, on incrémente i à l'étape E554 et on boucle à l'étape E544 afin de réaliser un nouveau masquage, un nouveau recalcul des tables de substitution et la nouvelle ronde.

Dans l'affirmative à l'étape E552, on procède à l'étape E538 déjà mentionnée et décrite à présent.

L'étape E538 consiste à réaliser la permutation finale prévue dans l'algorithme DES, en l'appliquant d'une part au message M et d'autre part au masque courant X.

On peut ensuite procéder à l'étape E540 au démasquage du message M, c'est-à-dire au remplacement du message M par M ⊕ X.

On procède alors à l'étape E556 (qui suit également la permutation finale de l'étape E518 décrite plus haut) au cours de laquelle on émet à travers l'interface 8 le message M dans son état courant et qui correspond au message chiffré puisqu'on lui a appliqué l'algorithme DES.

On retourne alors à l'étape E502 dans l'attente de la réception à travers l'interface 8 d'un nouveau message M à chiffrer.

L'algorithme qui vient d'être décrit permet ainsi de mettre en oeuvre un algorithme cryptographique DES sans masquage lorsque le compteur COMPT du nombre de mises en oeuvre de cet algorithme est inférieur au premier seuil A. En revanche, lorsque le compteur est compris entre le premier seuil A et le second seuil B, l'algorithme DES est mis en oeuvre avec masquage par un masque unique pour l'ensemble de l'algorithme. Enfin, lorsque le compteur est supérieur au second seuil B, l'algorithme DES est réalisé avec un masque différent pour chaque ronde de cet algorithme.

La force des contre-mesures appliquées, et le coût en temps de fonctionnement conséquent, varient ainsi en fonction de la valeur du compteur COMPT du nombre de mises en oeuvre de cet algorithme cryptographique, valeur indicative du risque d'attaque du fait que les attaques reposent généralement sur la répétition de l'algorithme cryptographique.

Le premier seuil A correspond par exemple à un nombre de mises en oeuvre de l'algorithme cryptographique relativement élevé mais envisageable dans les conditions normales de fonctionnement, tandis que le second seuil B peut correspondre à un nombre exceptionnellement atteint en fonctionnement normal et qui correspond donc à un fort risque d'attaque.

Les modes de réalisation qui précèdent ne sont que des exemples possibles de mise en oeuvre de l'invention qui ne s'y limite pas.

Ces exemples utilisent notamment le nombre de mises en oeuvre de l'algorithme cryptographique en tant que valeur représentative du risque d'attaque visant cet algorithme.

Dans un exemple non revendiqué, cet indicateur pourrait toutefois être remplacé par une autre valeur disponible dans la carte à microcircuit et représentative du risque d'attaque, tel que par exemple le temps écoulé depuis la dernière mise en oeuvre de l'algorithme cryptographique (le risque d'attaque étant décroissant en fonction du temps écoulé entre deux mises en oeuvre successives de l'algorithme cryptographique et l'importance des contre-mesures mises en oeuvre décroissant donc au fur et à mesure que ce temps écoulé augmente) ou une donnée physique mesurée au sein de la carte à microcircuit, telle que la température (une augmentation de la température correspondant notamment à un risque d'attaque par faute) ou une mesure de flexion de la carte (une flexion de la carte étant de même indicative d'une tentative d'intrusion).

Dans les exemples qui viennent d'être donnés, la détermination de la valeur représentative du risque peut être réalisée comme proposé dans les demandes de brevet WO 2004/029873, FR 2 837 959 et FR 2 728 710, la valeur ainsi déterminée pouvant alors aisément remplacer le compteur COMPT dans les exemples proposés ci-dessus.

**Revendications**

1. Procédé de traitement de données au sein d'une entité électronique portable comportant un microcircuit configuré pour mettre en oeuvre une opération dite sensible (E314) de type opération cryptographique, comportant les étapes suivantes :

    - détermination (E304) d'une valeur (COMPT) indicative d'un nombre de mises en oeuvre de l'opération sensible (E314);
    - détermination (E306) d'un nombre NB en fonction de ladite valeur ;
    - mise en oeuvre d'un nombre, égal à NB, d'autres itérations (E316) de l'opération sensible avec une donnée (K') obtenue par tirage aléatoire et une seule fois de l'opération sensible (E314) avec une clé secrète (K), la mise en oeuvre de l'opération sensible utilisant la clé secrète étant réalisée parmi les autres itérations à un instant dépendant d'une deuxième donnée (a) obtenue par tirage aléatoire,

le nombre NB d'autres itérations étant limité en nombre tant que ladite valeur est faible et le nombre NB d'autres itérations étant augmenté lorsque ladite valeur est élevée.

2. Procédé de traitement de données selon la revendication 1, dans lequel ladite valeur (COMPT) est une valeur numérique.

3. Procédé de traitement de données selon la revendication 1 ou 2, dans lequel ladite valeur est liée à un paramètre d'exécution de l'opération sensible.

4. Procédé de traitement de données selon l'une des revendications 1 à 3, dans lequel ladite valeur dépend des exécutions précédentes de l'opération sensible.

5. Procédé de traitement de données selon l'une des revendications 1 à 4, comprenant une étape d'incrémentation d'un compteur (COMPT) mémorisant ladite valeur en cas de mise en oeuvre de l'opération sensible.

6. Procédé de traitement de données selon l'une des revendications 1 à 5, dans lequel les NB autres itérations sont aptes à augmenter l'entropie du traitement.

7. Procédé de traitement de données selon l'une des revendications 1 à 6, dans lequel le nombre NB est croissant en fonction de ladite valeur.

8. Entité électronique portable (10) comprenant :

- un microcircuit (2) configuré pour mettre oeuvre une opération dite sensible de type opération cryptographique ;
- des moyens de détermination d'une valeur indicative d'un nombre de mises en oeuvre de l'opération sensible ;
- des moyens de détermination d'un nombre NB en fonction de ladite valeur ;
- des moyens de mise en oeuvre d'un nombre, égal à NB, d'autres itérations (E316) de l'opération sensible avec une donnée (K') obtenue par tirage aléatoire et une seule fois de l'opération sensible (E314) avec une clé secrète (K), la mise en oeuvre de l'opération sensible utilisant la clé secrète étant réalisée parmi les autres itérations à un instant dépendant d'une deuxième donnée (a) obtenue par tirage aléatoire,

le nombre NB d'autres itérations étant limité en nombre tant que ladite valeur est faible et le nombre NB d'autres itérations étant augmenté lorsque ladite valeur est élevée.

9. Entité électronique portable (10) selon la revendication 8, dans laquelle ladite valeur est une valeur numérique, et dans laquelle le nombre NB d'autres itérations est croissant en fonction de ladite valeur.

**Patentansprüche**

1. Verfahren zur Datenverarbeitung innerhalb einer tragbaren elektronischen Einheit, die eine Mikroschaltung aufweist, die dafür ausgelegt ist, eine sogenannte sensible Operation (E314) vom Typ einer kryptographischen Operation durchzuführen, die folgenden Schritte umfassend:

   - Bestimmung (E304) eines Wertes (COMPT), der für eine Anzahl von Durchführungen der sensiblen Operation (E314) indikativ ist;
   - Bestimmung (E306) einer Anzahl NB in Abhängigkeit von diesem Wert;
   - Durchführung einer Anzahl NB von weiteren Iterationen (E316) der sensiblen Operation mit einem durch zufälliges Ziehen erhaltenen Datenelement (K') und einmalige Durchführung der sensiblen Operation (E314) mit einem geheimen Schlüssel (K), wobei die Durchführung der sensiblen Operation unter Verwendung des geheimen Schlüssels zwischen den weiteren Iterationen zu einem Zeitpunkt erfolgt, der von einem durch zufälliges Ziehen erhaltenen zweiten Datenelement (a) abhängt,

   wobei die Anzahl NB von weiteren Iterationen zahlenmäßig begrenzt ist, solange der besagte Wert niedrig ist, und die Anzahl NB von weiteren Iterationen erhöht wird, wenn der besagte Wert hoch ist.

2. Datenverarbeitungsverfahren nach Anspruch 1, wobei der Wert (COMPT) ein numerischer Wert ist.

3. Datenverarbeitungsverfahren nach Anspruch 1 oder 2, wobei der Wert mit einem Parameter der Ausführung der sensiblen Operation zusammenhängt.

4. Datenverarbeitungsverfahren nach einem der Ansprüche 1 bis 3, wobei der Wert von den vorhergehenden Ausführungen der sensiblen Operation abhängt.

5. Datenverarbeitungsverfahren nach einem der Ansprüche 1 bis 4, welches einen Schritt der Inkrementierung eines Zählers (COMPT), der den Wert speichert, im Falle einer Durchführung der sensiblen Operation umfasst.

**6.** Datenverarbeitungsverfahren nach einem der Ansprüche 1 bis 5, wobei die NB weiteren Iterationen geeignet sind, die Entropie der Verarbeitung zu erhöhen.

**7.** Datenverarbeitungsverfahren nach einem der Ansprüche 1 bis 6, wobei die Anzahl NB als Funktion des besagten Wertes wachsend ist.

**8.** Tragbare elektronische Einheit (10), welche umfasst:

- eine Mikroschaltung (2), die dafür ausgelegt ist, eine sogenannte sensible Operation vom Typ einer kryptographischen Operation durchzuführen;
- Mittel zur Bestimmung eines Wertes, der für eine Anzahl von Durchführungen der sensiblen Operation indikativ ist;
- Mittel zur Bestimmung einer Anzahl NB in Abhängigkeit von diesem Wert;
- Mittel zur Durchführung einer Anzahl NB von weiteren Iterationen (E316) der sensiblen Operation mit einem durch zufälliges Ziehen erhaltenen Datenelement (K') und einmaligen Durchführung der sensiblen Operation (E314) mit einem geheimen Schlüssel (K), wobei die Durchführung der sensiblen Operation unter Verwendung des geheimen Schlüssels zwischen den weiteren Iterationen zu einem Zeitpunkt erfolgt, der von einem durch zufälliges Ziehen erhaltenen zweiten Datenelement (a) abhängt,

wobei die Anzahl NB von weiteren Iterationen zahlenmäßig begrenzt ist, solange der besagte Wert niedrig ist, und die Anzahl NB von weiteren Iterationen erhöht wird, wenn der besagte Wert hoch ist.

**9.** Tragbare elektronische Einheit (10) nach Anspruch 8, wobei der Wert ein numerischer Wert ist und wobei die Anzahl NB von weiteren Iterationen als Funktion des besagten Wertes wachsend ist.

**Claims**

**1.** Method for processing data within a portable electronic entity comprising a microcircuit configured to implement a cryptographic operation called the sensitive operation (E314), comprising the following steps:

- determining (E304) a value (COMPT) indicative of a number of implementations of the sensitive operation (E314);
- determining (E306) a number NB depending on said value;
- implementing a number, equal to NB, of other iterations (E316) of the sensitive operation with a datum (K') obtained by random draw and implementing once the sensitive operation (E314) with a secret key (K), the implementation of the sensitive operation using the secret key being carried out among the other iterations at a time dependent on a second datum (a) obtained by random draw,

the number NB of other iterations being limited in number provided that said value is low and the number NB of other iterations being increased when said value is high.

**2.** Method for processing data according to Claim 1, wherein said value (COMPT) is a numerical value.

**3.** Method for processing data according to Claim 1 or 2, wherein said value is related to a parameter of execution of the sensitive operation.

**4.** Method for processing data according to one of Claims 1 to 3, wherein said value depends on the preceding executions of the sensitive operation.

**5.** Method for processing data according to one of Claims 1 to 4, comprising a step of incrementing a counter (COMPT) storing said value in case of implementation of the sensitive operation.

**6.** Method for processing data according to one of Claims 1 to 5, wherein the NB other iterations are able to increase the entropy of the processing.

**7.** Method for processing data according to one of Claims 1 to 6, wherein the number NB increases as a function of said value.

**8.** Portable electronic entity (10) comprising:

- a microcircuit (2) configured to implement a cryptographic operation called the sensitive operation;
- means for determining a value indicative of a number of implementations of the sensitive operation;
- means for determining a number NB depending on said value;
- means for implementing a number, equal to NB, of other iterations (E316) of the sensitive operation with a datum (K') obtained by random draw and implementing once the sensitive operation (E314) with a secret key (K), the implementation of the sensitive operation using the secret key being carried out among the other iterations at a time dependent on a second datum (a) obtained by random draw,

the number NB of other iterations being limited in number provided that said value is low and the number NB of other iterations being increased when said value is high.

9. Portable electronic entity (10) according to Claim 8, wherein said value is a numerical value, and wherein the number NB of other iterations increases as a function of said value.

Fig. 1

Fig. 2

Fig. 3

Initialisation carte:
COMPT=0, clé K — E300

E302 — Appel DES ? N

O

COMPT ← COMPT+1 — E304

NB ← f(COMPT) — E306

i ← 0 — E308

E310 — Tirage aléatoire K', a (0<a≤1)

O — $\frac{i}{NB+1} < a \leq \frac{i+1}{NB+1}$ ? — N

E314 — $E \leftarrow DES_K(M)$     E312     E316 — $E' \leftarrow DES_{K'}(M)$

i ← i+1 — E318

E320 — i > NB ? N

O

Renvoi E — E322

Fig. 4

```
          Initialisation carte:
          COMPT=0, clé K                    E500

          Réception message M               E502

          COMPT ← COMPT+1                   E504

E506        COMPT        O
            > A?

              N                    Tirage aléatoire X        E520

    Permutation initiale M   E508   Masquage M par X          E522
                                     (M←M⊕X)

         i = 1    E510          Permutation initiale M, X

E512  Itération i sur M   i←i+1   E514      E526                    E524
                                        N    COMPT    O
                                             > B?
E516    i = 16 ?    N                                  E542    i←1

              O         Recalcul boîtes-S          E544
                        selon masque X                    Tirage aléatoire Y
Permutation finale M                          E546
                              E528    Masquage
  E518               i = 1                      supplémentaire Y
                E530                            (M←M⊕Y, X←X⊕Y)
                                       E554
           Itération i sur M
           avec boîtes-S recalculées   i←i+1   Recalcul boîtes-S selon
                                               masque courant X
      E532                                          E548
              i = 16 ?    N    i←i+1    Itération i sur M avec
E534                                    boîtes-S recalculées
E538          O        E536
         Permutation finale M, X       E550    i = 16 ?   N

           Démasquage M (M←M⊕X)  E540            O    E552
E556
    Emission message M chiffré
```

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004029873 A
- EP 1612639 A
- EP 1575293 A
- EP 826169 A
- FR 2837959
- FR 2728710